# EUROPEAN PATENT SPECIFICATION

(11) **EP 1 021 568 B1**
(45) Date of publication and mention of the grant of the patent: **27.11.2002**
(21) Application number: 97944068.2
(22) Date of filing: 18.09.1997
(51) Int. Cl.: C14C 9/00, C08F 8/00

(54) **AMPHIPHILIC PERFLUOROALKYL MODIFIED POLYDIENES AND THEIR USE IN THE TREATMENT OF LEATHER**
AMPHIPHILE PERFLUOROALKYL-MODIFIZIERTE POLYDIENE UND IHRE VERWENDUNG IN DER BEARBEITUNG VON LEDER
POLYDIENES MODIFIES A L'AIDE DE PERFLUOROALKYLE AMPHIPHILE ET LEUR UTILISATION DANS LE TRAITEMENT DU CUIR

(43) Date of publication of application: 26.07.2000
(73) Proprietor: MINNESOTA MINING AND MANUFACTURING COMPANY, St. Paul, Minnesota 55133-3427 (US)
(72) Inventor: COPPENS, Dirk, Maurice, Johanna, B-9120 Melsele (BE)
(74) Representative: Voortmans, Gilbert J.L.
(86) International application number: IB9701352
(87) International publication number: WO99014380

(56) References cited:
- EP-A- 0 372 746
- EP-A- 0 418 661
- EP-A- 0 682 044
- US-A- 3 332 892
- US-A- 4 100 225

## Description

### 1. Field of the invention.

The present invention relates to a fluorochemical composition for the treatment of leather to impart water repellency and/or water proofness properties thereto.

### 2. Background of the invention.

The treatment of hides and skins to form leather involves a number of interdependent chemical and mechanical operations. These operations may be divided into a sequence of "wet end" steps followed by a sequence of "dry" steps. A description of each of these operations is provided in Fundamentals of Leather Manufacturing, Prof Dr

Heidemann (Eduard Roether KG, 1993). The primary tanning operation involves the treatment of the hide to preserve it and form useful leather. Chrome tanning salts are well known and widely used for this purpose. Chrome-tanned hides or skins are known in the art as 'wet blue leather'. In order to produce a uniform piece of leather with the required physical and aesthetic properties, a second tanning step, known as 'retanning', is employed. Retanning can be accomplished using a variety of naturally derived materials including extracts from vegetables or plants, and synthetic tanning agents known as "syntans", or combinations thereof. After or during retanning, the leather can be colored and fatliquored. The present invention relates to the wet end operations which take place after primary tanning, namely retanning and fatliquoring.

In a number of publications there have been proposed various copolymers for treating leather during tanning and retanning in order to provide various desired properties to the leather such as oil and/or water repellency, stain resistance and water proofness.

EP-A-372 746 discloses a method and process for treating leather utilising selected amphiphilic copolymers for improving the strength, temper and water resistance of the leather. The amphiphilic copolymers are formed from a predominant amount of at least one hydrophobic monomer and a minor amount of at least one copolymerizable hydrophilic monomer. The application states that the process may be particularly useful as a one step substitute for conventional retanning and fatliquoring treatment steps.

EP-A-682 044 discloses copolymers comprising ethylenically unsaturated dicarboxylic acid anhydrides, long chain olefins and fluorolefins. Leathers treated with these polymers are shown to yield good water proofness results according to the Bally-Penotrometer test.

US 5,124,181 discloses copolymers which contain a) from 50 to 90% by weight of C₈-C₄₀-alkyl methacrylates, vinyl esters of C₈-C₄₀-carboxylic acids or mixtures thereof and b) from 10 to 50% by weight of monoethylenically unsaturated C₃-C₁₂-carboxylic acids, monoethylenically unsaturated dicarboxylic anhydrides, monoesters or monoamides of monoethylenically unsaturated C₄-C₁₂-dicarboxylic acids, amides of C₃-C₁₂-monocarboxylic acids or mixtures thereof as copolymerized units and which have molecular weights of from 500 to 30 000. The copolymers are used in at least partially neutralized form in aqueous solution or dispersion for making leather and furs water repellent.

WO 94/01587 discloses water-dispersible and/or water-emulsifiable co-oligomers containing (a) fatty crotonates ; (b) radically copolymerizable, hydrophilic, ethylenically unsaturated acids and/or their anhydrides, and possibly (c) minor amounts of other copolymerizable comonomers. These co-oligomers are used as amphiphilic agents for greasing leather and pelts.

US 4.100.225 further discloses blends of (a) a graft copolymer of a perfluorinated unsaturated compound, which does not readily homopolymerize, on a backbone polymer, (b) a copolymer of the perfluorinated unsaturated compound with an ethylenically unsaturated comonomer, and (c) oligomers of the perfluorinated unsaturated compound. The blend is taught to be useful to provide soil repellency to various substrates including leather.

Despite the various publications there continues to be a need for further fluorochemical compositions for the treatment of leather to impart desired properties thereto such as water repellency, water proofness, oil repellency, stain resistance etc... It is further desired that such fluorochemical composition can be readily produced in a cost effective way, has a sufficient storage stability and is effective even if applied in low quantities to the substrate. Highly desired fluorochemical compositions are those that can impart both good water repellency as well as good water proofness to leather.

### 3. Summary of the invention.

The present invention provides a fluorochemical composition for the treatment of leather, comprising (a) a reaction product of (i) a polydiene grafted with an ethylenically unsaturated dicarboxylic acid anhydride and:
(ii) a fluorochemical compound selected from the group consisting of a fluorinated alcohol, a fluorinated thiol and a fluorinated amine or
(iii) a mixture of said fluorochemical compound and a compound of the formula R-X wherein R is an aliphatic group containing at least 4 carbon atoms and X is hydroxy, SH or a primary or secondary amino group or (b) a salt of said reaction product.

The invention further provides a method of treating leather by contacting leather with the fluorochemical composition.

The use of the fluorochemical composition to provide water proofness and/or water repellency to leather is also provided.

Further provided are a reaction product of (i) a polydiene grafted with an ethylenically unsaturated dicarboxylic acid anhydride and:
(ii) a fluorochemical compound selected from the group consisting of a fluorinated alcohol, a fluorinated thiol and a fluorinated amine or
(iii) a mixture of said fluorochemical compound and a compound of the formula R-X wherein R is an aliphatic group containing at least 4 carbon atoms and X is hydroxy, SH or a primary or secondary amino group and the salt of said reaction product.

### 4. Detailed description of the invention.

The polydienes useful in the present invention include, for example, polybutadienes such as 1,4-polybutadiene, 1,2-polybutadiene, polyisoprene, styrene-butadiene copolymers and block-copolymers and acrylonitrile butadiene copolymers and ethylene-propylene-diene terpolymers. In accordance with the present invention, the polydiene has been grafted with an ethylenically unsaturated dicarboxylic acid anhydride. Preferably, the polydiene has been grafted with an ethylenically unsaturated dicarboxylic acid anhydride according to one of the following formulas: 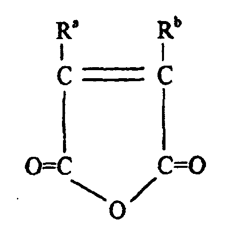 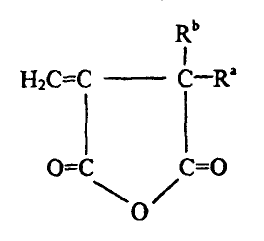 wherein R^{a} and R^{b} independently represent hydrogen or an alkyl group having 1 to 4 carbon atoms. Particularly preferred are maleic acid anhydride, itaconic acid anhydride and citraconic acid anhydride. The polydienes grafted with an ethylenically unsaturated dicarboxylic acid anhydride can be prepared according to procedures well known to those skilled in the art. Furthermore, some grafted polydienes for use in this invention are commercially available including for example the polybutadienes grafted with maleic acid anhydride available under the brand LITHENE™ from Revertex Ltd., UK. Preferably, the polydienes grafted with an ethylenically unsaturated dicarboxylic acid anhydride have a molecular weight (determined by GPC) between 1000 and 100000, preferably between 1000 and 50000.

The reaction product of the fluorochemical composition can be prepared by reacting the grafted polydiene with a fluorochemical compound selected from the group consisting of a fluorinated alcohol, a fluorinated thiol and a fluorinated amine or by reacting the grafted polydiene with a mixture of said fluorochemical compound and a compound of the formula R-X wherein R is an aliphatic group containing at least 4 carbon atoms and X is hydroxy, SH or a primary or secondary amino group. The reaction can be carried out in the melt of the grafted diene or alternatively the reaction is carried out in the presence of an organic solvent such as toluene. If a solvent is used, the solvent is preferably removed after completion of the reaction, for example by distillation under a reduced pressure. If desired, the reaction can be accelerated by using a catalyst. Suitable catalysts include pyridine or 4-(dimethylamino)-pyridine.

Fluorochemical compounds useful in the preparation of the reaction product typically include those according to the following formula:

R_{f}-L-Z

wherein R_{f} represents a fluorinated, preferably perfluorinated aliphatic group having at least 3 carbon atoms, more preferably 6 to 12 carbon atoms; L represents an organic divalent linking group and Z represents hydroxy, SH or a primary or secondary amino group.

R_{f} is preferably a fluorinated, stable, inert, preferably saturated, non-polar, monovalent alkyl group. It can be straight chain, branched chain, or cyclic or combinations thereof. It can contain heteroatoms, bonded only to carbon atoms, such as oxygen, divalent or hexavalent sulfur, or nitrogen. R_{f} is preferably a fully-fluorinated alkyl group, but hydrogen or chlorine atoms can be present as substitutents but preferably not more than one atom of either is present for every two carbon atoms. The R_{f} group has at least 3 carbon atoms, preferably 3 to 12 carbon atoms and more preferably at least 6 carbon atoms. R_{f} preferably contains about 40% to about 80% fluorine by weight, more preferably about 50% to about 78% fluorine by weight. The terminal portion of the R_{f} radical is preferably a perfluorinated moiety, preferably containing at least 7 fluorine atoms, e.g., CF₃CF₂CF₂-, (CF₃)₂CF-, F₅SCF₂-. Preferred R_{f} groups are fully or substantially fluorinated and are preferably those perfluorinated alkyls according to the formula CₙF₂ₙ₊₁- where n is 3 to 12.

Examples of suitable linking groups (L) include straight chain, branched chain or cyclic alkylene, arylene, aralkylene, oxy, oxo, hydroxy, thio, sulfonyl, sulfoxy, amino, imino, sulfonamido, carboxyamido, carbonyloxy, urethanylene, ureylene, and combinations thereof such as sulfonamidoalkylene.

Particular examples of fluorochemical compounds include monofunctional fluoroaliphatic alcohols such as the N-alkanol perfluoroalkylsulfonamides described in U.S. Pat. No. 2,803,656 (Ahlbrecht et al.). Illustrative of the fluoroaliphatic alcohols are the following: N-ethyl-N-(2-hydroxyethyl)-perfluorooctanesulfonamide, N-propyl-N-(2-hydroxyethyl)-perfluorooctanesulfonamide, N-ethyl-N-(2-hydroxyethyl)-perfluorodecanesulfonamide, N-ethyl-N-(2-hydroxyethyl)-perfluorododecanesulfonamide, N-ethyl-N-(2-hydroxyethyl)-perfluorocyclohexylethanesulfonamide, N-propyl-N-(2-hydroxyethyl)-perfluorobutylcyclohexanesulfonamide, N-ethyl-N-(2-hydroxyethyl)-perfluoro-4-dodecylcyclohexanesulfonamide, N-ethyl-N-(2-hydroxyethyl)-perfluoro-2-methylcyclohexanesulfonamide, N-ethyl-N-(6-hydroxyhexyl)-perfluorooctanesulfonamide, N-methyl-N-(11-hydroxyundecyl)-perfluorooctanesulfonamide, N-methyl-N-(4-hydroxybutyl)-perfluorobutanesulfonamide, N-(2-hydroxyethyl)-perfluorooctanesulfonamide and N-methyl-N-(2-hydroxyethyl)-perfluorooctanesulfonamide.

Still other alcohols useful in said reaction with anhydride preparing the reaction product of the invention include the perfluoroalkyl-substituted alkanols of the formula CₙF₂ₙ₊₁CH₂OH, where n is 4 to 10 (e.g., C₄F₉CH₂OH), described, for example, in U.S. Pat. No. 2,666,797 (Husted et al.), and of the formula R_{f} (CH₂)ₘOH where R_{f} is a perfluoroalkyl radical having from 4 to 10 carbon atoms and m is an-integer from 1 to 4.

Illustrative perfluoroalkyl mercaptans useful to prepare a reaction product of this invention include, for example, mercaptans described in a number of U.S. patents including U.S. Pat. Nos. 2,894,991; 2,961,470; 2,965,677; 3,088,849; 3,172,190; 3,544,663 and 3,655,732.

Illustrative fluoroaliphatic amines useful to prepare a reaction product of this invention include fluoroalkylamines as described in U.S. Pat. No. 5,026,910 (Bollens et al.).

A mixture of a fluorochemical compound and a non-fluorinated compound according to the formula R-X can also be used to prepare the reaction product. Preferred non-fluorinated compounds include linear or branched alkanols having at least 4 carbon atoms and more preferably between 6 and 36 carbon atoms. Examples include stearyl alcohol, isostearyl alcohol, dodecanol and ethylhexyl alcohol. If a mixture of fluorochemical compound and a non-fluorinated compound is used, the mixture preferably includes at least 25 mol% of fluorochemical compound and more preferably at least 40 mol% of fluorochemical compound.

A preferred reaction product for use in the fluorochemical composition comprises a polymer comprising a divalent unit of formula (I), a divalent unit of formula (II) and at least one divalent unit of formula (III) or (IV):

-CH₂CH=CHCH₂- (I)

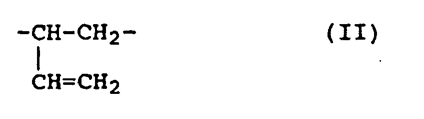

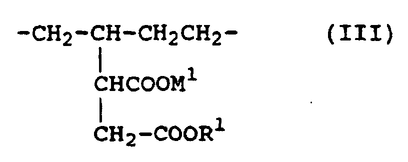

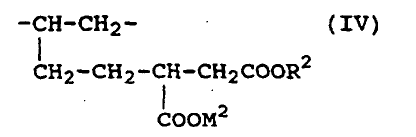

wherein M¹ and M² independently represent hydrogen or a cation such as e.g. Na⁺, K⁺ or NH₄⁺ and R¹ and R² independently represent a perfluorinated alkyl group having at least 3 carbon atoms, preferably at least 6 carbon atoms. In accordance with a further embodiment of this invention, the polymer may further comprise divalent units according to formula (V) or (VI): 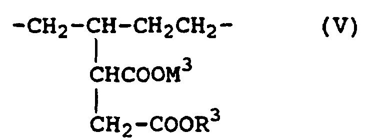 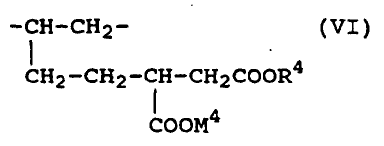 wherein M³ and M⁴ independently represent hydrogen or a cation and R³ and R⁴ independently represent an alkyl group having at least 4 carbon atoms, preferably between 6 and 36 carbon atoms. The polymer preferably comprises between 99mol% and 50 mol% of divalent units corresponding to formula (I) or (II) and between I mol% and 50mol% of divalent units corresponding to formula (III), (IV), (V) or (VI).

The fluorochemical composition is preferably used as an aqueous composition, in particular as an aqueous solution or an aqueous dispersion in water. Aqueous solutions can be prepared by completely or partially neutralising the reaction product, with dilute base, and solubilizing the neutralised polymer in warm water or mixtures of water with water-soluble solvents (e.g. acetone, isopropanol, butylglycol, etc.). Thus obtained aqueous solutions preferably have a solids content of 5 to 60 % by weight. The aqueous solutions obtained in this way can be further diluted with water before application to the substrate.

Aqueous dispersions of the reaction product in water can be prepared with the aid of surfactants, and relatively large amounts of energy, e.g. supplied by an Ultrasonic or Manton Gaulin equipment. To facilitate preparation of the aqueous dispersions, the reaction product can be first dissolved in solvents, and dispersion is then preferably carried out in two separate steps: a predispersion followed by fine dispersion. The predispersion can be carried out by using high shearing forces, for example by using a high-speed stirrer, such as a dispersing machine of the Ultraturax™ type, and the predispersion thereby obtained is then subjected, for example, to ultrasonic treatment or treatment in a high pressure homogenizer. Dispersion is generally carried out at a temperature between 20 and 80 °C. After this treatment the particle size in the dispersion generally will be equal or less than 1 micron. Generally the aqueous dispersion as a concentrate contains about 5 to 50% by weight of the active polymer, about 0.5 to 15% by weight of one or more emulsifying agents, and about 0 to 30 % by weight of a solvent or solvent mixture, the remainder being water. Solventless dispersions can be prepared by removing the solvents by distillation after dispersion.

Mixtures of water-insoluble solvents with water-soluble solvents can be employed as the solvent for the preparation of the dispersion, the amount of water-insoluble solvent in most cases being greater than the water-soluble solvent. Suitable water-soluble solvents are, for example mono- or dialcohols, lower ketones, polyglycolesters and polyglycolethers, or mixtures of such solvents. Examples of water-insoluble solvents are esters, ethers, and higher ketones. Lower boiling solvent portions can be removed by, for example distillation, at a later time if desired. Preferred water-insoluble solvents are esters or ketones, such as ethylacetate, butylacetate and methylethylketone.

In accordance with a preferred method of treating leather in connection with this invention, a leather such as a tanned hide is contacted with an aqueous composition, preferably an aqueous dispersion or solution, comprising the fluorochemical composition. The aqueous dispersions containing the fluorochemical composition are suitable for the treatment of all conventional tanned hides, in particular hides tanned with mineral tanning agents, such as chromium(III)salts. The tanned hides are usually neutralized before treatment.

The fluorochemical compositions are typically applied to leather in a bath exhaust treatment. The fluorochemical compositions are preferably applied during the final wet production step of the leather, viz., after the standard chrome tanning. The fluorochemical compositions can be applied before, during and/or after the retanning, dyeing and fatliquoring steps used in a customary manner for the preparation of leather. The fluorochemical compositions can be added in a diluted or concentrated form to the tanning drum, in an amount sufficient to impart the desired level of performance, said amount usually being between 0.1% and 30% by weight, preferably between 0.5% and 15% by weight, based on the shaved weight of the leather or the wet weight of the hide or wet blue leather.

At the moment of addition, the tanning drum contains preferably from 50 - 500 % of water relative to the shaved weight of the leather and the pH of the water is preferably 4.5 or more. The exhaust process is typically carried out for 15 to 120 minutes, at a temperature of 30 to 60 °C. After the exhaust period, the pH of the bath is lowered to around 3.5 with acid, e.g. formic acid.

At the end of the wet processing of the leather a fixation with multivalent mineral salts (Cr, Zr Al, ...) may be carried out, such process of fixation is well known to those skilled in the art and can be carried out in a customary way. Subsequently, the leather can be finished in the usual way, by e.g. vacuum drying, staking and eventually application of a coating.

In order to increase repellency properties and the durability thereof and to aid in the application of a fluorochemical composition according to the present invention to a leather substrate to be treated therewith, it may be advantageous to incorporate into the composition, one or more other substances such as oil and/or water repellent compositions and/or siloxane softening agents. Also other additives such as conventional leather finishing agents e.g. retanning, fatliquoring agents can be added.

The invention is illustrated with reference to the following examples without however the intention to limit the invention thereto. All parts in the examples are by weight unless indicated otherwise.

### EXAMPLES

The leather substrates used for the evaluation of the treatment according to the invention are all commercially available and are listed below:
* Wet blue leather, 2.0-2.2 mm, tanned according to typical procedures used to prepare shoe upper leather and available from Rompa Leder, the Netherlands
* Wet blue leather, 1.7 mm, available from Rompa Leder, the Netherlands
* Bovine nubuck for shoe upper leather (crust leather), 1.4 mm.

The water and oil repellency data shown in the Examples and Comparative Examples are based on the following methods of measurement and evaluation criteria :

### Water Repellency Test (WR)

The water repellency (WR) of a treated substrate was measured using a series of water-isopropyl alcohol test liquids and was expressed in terms of the "WR"rating of the treated substrate. The WR rating corresponds to the most penetrating test liquid which does not penetrate or wet the substrate surface after 15 seconds exposure. Treated subtrates which are penetrated by or are resistant only to a 100% water (0% isopropyl alcohol) test liquid, the least penetrating test liquid, are given a rating of 0, whereas treated substrates resistant to a 100% isopropyl alcohol (0% water) test liquid, the most penetrating test liquid, are given a rating of 10. Other intermediate ratings are calculated by dividing the percent isopropylalcohol in the test liquid by 10, e.g., a treated substrate resistant to a 70%/30% isopropyl alcohol/water blend, but not to a 80%/20% blend, would be given a rating of 7.

### Spray Rating (SR)

The spray rating of a treated substrate is a value indicative of the dynamic repellency of the treated substrate to water that impinges on the treated substrate. The repellency is measured by Standard Test Number 22, published in the 1985 Technical Manual and Yearbook of the American Association of Textile Chemists and Colorists (AATCC), and is expressed in terms of 'spray rating' of the tested substrate. The spray rating is obtained by spraying 250 ml water on the substrate from a distance of 15 cm. The wetting pattern is visually rated : using a 0 to 100 scale, where 0 means complete wetting and 100 means no wetting at all.

### Oil Repellency (OR)

The oil repellency of a treated substrate is measured by the American Association of Textile Chemists and Colorists (AATCC) Standard Test Method No. 118-1983, which test is based on the resistance of a treated substrate to penetration by oils of varying surface tensions. Treated substrates resistant only to Nujol^{R}, mineral oil (the least penetrating of the test oils) are given a rating of 1, whereas treated substrates resistant to heptane (the most penetrating of the test oils) are given a rating of 8. Other intermediate values are determined by use of other pure oils or mixtures of oils, as shown in the following table.

| Standard Test Liquids | |
|---|---|
| AATCC Oil Repellency Rating Number | Compositions |
| | |
| 1 | Nujol^{R Oil} |
| 2 | Nujol^{R Oil}/n-Hexadecane 65/35 |
| 3 | n-Hexadecane |
| 4 | n-Tetradecane |
| 5 | n-Dodecane |
| 6 | n-Decane |
| 7 | n-Octane |
| 8 | n-Heptane |

### Water proofness (Bally Penetrometer)

A Bally Penetrometer test according to DIN 53338 was used to evaluate the water proofness of shoe upper leathers. For this test, a Bally Penetrometer Model 5023 (a standardized dynamic testing machine for shoe upper leather) was used. The test piece was alternatively buckled and stretched by the machine, like an upper leather in actual use, while in contact with water on the grain side of the leather. The values measured in this test are :
1. the time until water first penetrates from one side of the test piece of treated leather to the other (said time is, for untreated leather, typically less than 15 minutes); and
2. the weight percent increase of the test piece caused by water absorption during the test (said weight increase, for untreated leather, is typically greater than 100% after one hour).

### Abraded Oil and Water Repellency

The repellency of an abraded, treated substrate is measured on 5cm x 12.5cm test pieces of treated substrate which has been abraded using 10 back and forth rubs over a 5-second period with abrasive paper ("WETORDRY - TRI-M-ITE" No600C) in an AATCC crockmeter (Model CM-1). The above-described OR and WR repellency tests are performed on the abraded test pieces and the repellency ratings recorded as Abraded Oil Repellency (AOR) and Abraded Water Repellency (AWR) values.

### Abbreviations

The following abbreviations and trade names are used in the examples:
Mefose : N-methyl-N-(2-hydroxyethyl)-perfluorooctanesulfonamide
Etfose: N-ethyl-N-(2-hydroxyethyl)-perfluorooctanesulfonamide,
DMAP: (Dimethylamino)-pyridine

### Example 1:

A fluorochemical composition of this invention was prepared as follows:
Part 1:
   In a dry 250 ml, three-necked, round-bottomed flask, equipped with a mechanical stirrer, a reflux condenser, temperature control, nitrogen inlet and a heating mantle, were charged 60 grams Lithene™ N4-5000-10MA (a liquid polybutadiene with a MW of 5,500 grafted with maleic acid anhydride, containing 9.1% maleic acid anhydride, having an average functionality of 4.5, and acid number of 52 mg KOH/g) and 90 g toluene, the mixture was heated and refluxed over a dean-stark trap for 60 minutes to remove trace amounts of water. The mixture was then cooled to 50°C and 33 grams Mefose and 0.1 gram DMAP were added. This mixture was then reacted for 16 hours at 110°C under a nitrogen atmosphere. After this reaction period the FTIR spectrum showed that all typical anhydride absorption at 1787 and 1864 cm⁻¹ disappeared, and that the typical ester absorption at 1738 cm⁻¹ and acid absorption at 1709 cm⁻¹ appeared in the spectrum. Toluene was distilled off under reduced pressure, and a brown, solid rubbery material was obtained after cooling to room temperature.
Part 2:
   60 grams of the thus prepared polymer were dissolved in 90 grams ethylacetate, when heated to 60°C a clear light brown solution was formed. To this solution, 1.5 grams of nonionic surfactant (Tween™ 80) was added. Separately a mixture of 120 grams water, 20 grams ethyleneglycol and 1.5 grams anionic surfactant (Siponate™ DS-10), was made and heated to 60°C. The warm ethylacetate solution was then poured into the warm water solution under vigorous stirring to form a pre-dispersion. The pre-dispersion was then treated with ultrasonic waves for 6 minutes, forming a stable dispersion. Ethylacetate was removed by distillation under reduced pressure. The resulting ethylacetate free dispersion was filtered through a 25 micron pore size filter bag. A stable milky-white, anionic aqueous dispersion of 30% active material was obtained.

### Examples 2 - 9 :

Following a similar procedure as outlined in example 1, different compositions were prepared using different maleic acid anhydride grafted polybutadienes and perfluoroalkyl containing alcohols :

| Ex. | Maleic acid anhydride grafted polybutadiene (Lithene™) | Molecular Weight | Average Funct. | FC-alcohol |
|---|---|---|---|---|
| 2 | N4-5000-15MA | 5,750 | 6.5 | Mefose |
| 3 | PM 25 MA | 1,625 | 3.3 | Mefose |
| 4 | LX 10 MA | 8,800 | 8.2 | Mefose |
| 5 | N4-5000-10MA | 5,500 | 4.5 | Etfose |
| 6 | N4-5000-15MA | 5,750 | 6.5 | Etfose |
| 7 | N4-5000-5MA | 5,250 | 2.6 | Mefose |
| 8 | N4-5000-25MA | 6,250 | 10.5 | Mefose |
| 9 | N4-9000 10MA | 9,500 | 8.5 | Mefose |

In all cases stable milky white emulsions were obtained.

### Examples 10 - 13 :

Following a similar procedure to example 1, different compositions were prepared using different maleic acid anhydride grafted polybutadienes and mixtures of perfluoroalkyl containing alcohols with non-fluorinated alcohols in a molar ratio of 1/1 :

| Ex. | Maleic acid anhydride grafted polybutadiene (Lithene™) | MW | Av. Funct. | FC-alcohol | HC-alcohol |
|---|---|---|---|---|---|
| 10 | N4-5000-10MA | 5,500 | 4.5 | Mefose | Stearyl |
| 11 | N4-5000-15MA | 5,750 | 6.5 | Mefose | Stearyl |
| 12 | N4-5000-10MA | 5,500 | 4.5 | Mefose | Isostearyl |
| 13 | N4-5000-15MA | 5,750 | 6.5 | Mefose | Isostearyl |

In all cases stable milky white emulsions were obtained.

### Examples 14-17 :

To prepare the following fluorochemical compositions, the procedure of example 1 was essentially followed except that the polymers prepared according to the procedure in Part 1 were neutralized with NH₄OH, and solubilized in a 50/50 water/butylglycol mixture. The final product mixture, contained 20% active material and was adjusted to a pH of around 8.

| Ex. | Maleic acid anhydride grafted polybutadiene (Lithene™) | Molecular Weight | Average Funct. | FC-alcohol |
|---|---|---|---|---|
| 14 | N4-5000-15MA | 5,750 | 6.5 | Mefose |
| 15 | N4-5000-10MA | 5,500 | 4.5 | Mefose |
| 16 | PM 25 MA | 1,625 | 3.3 | Mefose |
| 17 | LX 10 MA | 8,800 | 8.2 | Mefose |

Product appearance:
Example 14 : Clear light brown solution.
Example 15 : Slightly hazy, yellow, stable solution.
Example 16 : Hazy, stable brown solution.
Example 17 : Slightly hazy, brown, stable solution.

When the products were added to water, all products gave a stable very transparent bluish microemulsion which was formed spontaneously.

### Examples 18 - 21

The fluorochemical compositions were applied to shoe upper leather in a bath exhaust treatment. The fluorochemical compositions were applied during the final wet production step of the leather, after the standard chrome tanning, retanning and fatliquoring steps used for processing leather. For this purpose, the fluorochemical compositions were added in an amount of 1.2% of modified polybutadiene, relative to the crust weight of the leather, to the fatliquoring bath (which contained a liquor amounting to 200% of water relative to the crust weight of the leather). The bath temperature was 50°C and the pH around 4.5 at the moment of the addition of the modified polybutadiene composition. The exhaust process was continued for 30 minutes after which the pH was lowered to 3.5 with the addition of formic acid. After the fluorochemical treatment the leathers were washed with water, horsed-up overnight, dried 1 hour at 60 °C, softened and conditioned for 2 weeks at room temperature. Then the leathers were tested according to the test procedures described above. The test results are set forth in Table 1.

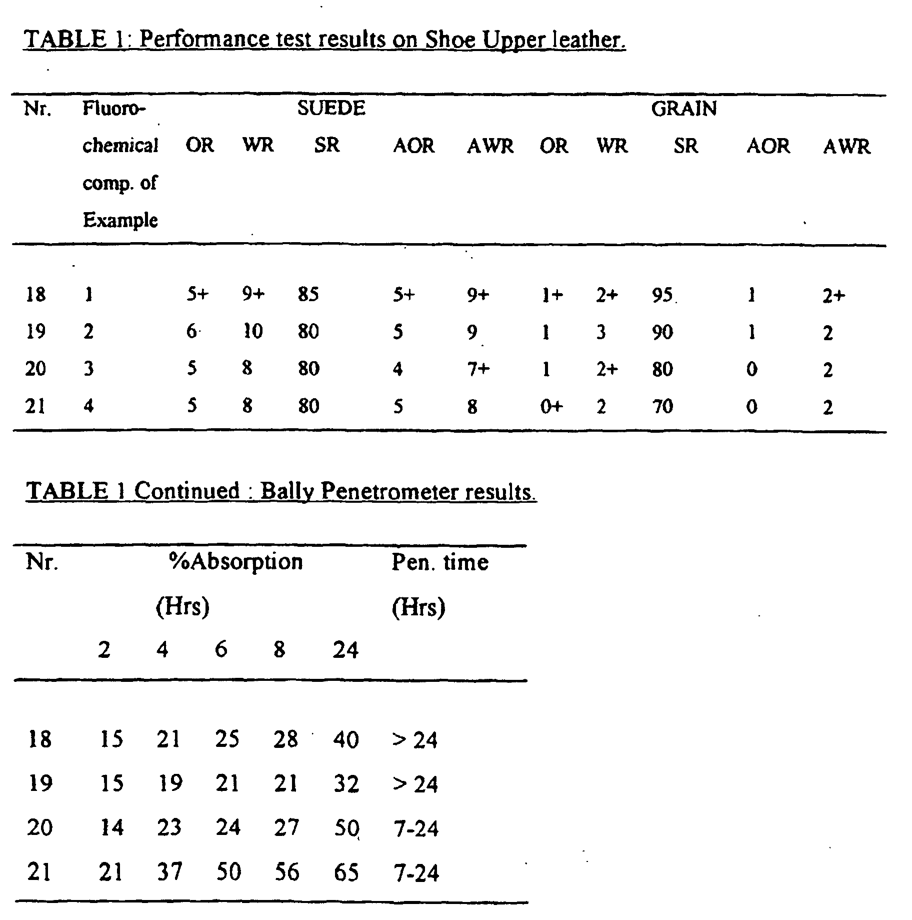

The results demonstrate that the modified polybutadienes are effective leather treatment agents, and that they impart good static and dynamic water-repellency to leather. They also provide good water proofness to leather.

### Examples 22 - 25

The fluorochemical compositions of examples 14 to 17 were applied to leather following the same procedure as was used in examples 18 to 21. The performance results are set forth in Table 2.

**TABLE 2 :**

| Test results of modified polybutadiene solutions. | | | | | | | | | | | |
|---|---|---|---|---|---|---|---|---|---|---|---|
| Nr. | Fluorochemical comp. of Example | SUEDE | | | | | GRAIN | | | | |
| | | OR | WR | SR | AOR | AWR | OR | WR | SR | AOR | AWR |
| 22 | 14 | 5 | 9 | 85 | 2 | 4+ | 1 | 3 | 70 | 0+ | 2 |
| 23 | 15 | 5 | 9 | 90 | 0 | 3+ | 1+ | 3+ | 95 | 0+ | 2 |
| 24 | 16 | 1+ | 3 | 70 | 0 | 2 | 0+ | 1 | 50 | 0+ | 1 |
| 25 | 17 | 4+ | 8 | 80 | 4 | 7 | 1 | 2 | 90 | 0+ | 2 |

The results listed in Table 2 demonstrate, that also aqueous solutions of the modified polybutadienes are effective leather treatment agents.

### Examples 26 - 29 :

The fluorochemical compositions of examples 10 to 13 were applied to leather using the treatment procedure as used in examples 18 - 21. The performance results are listed in Table 3.

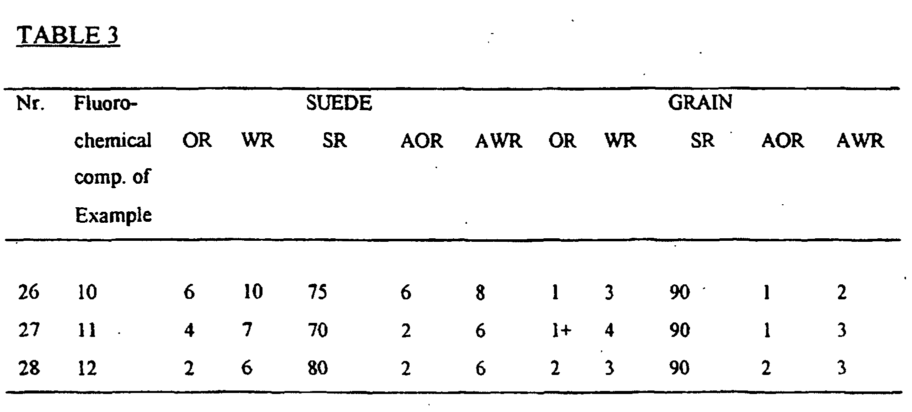

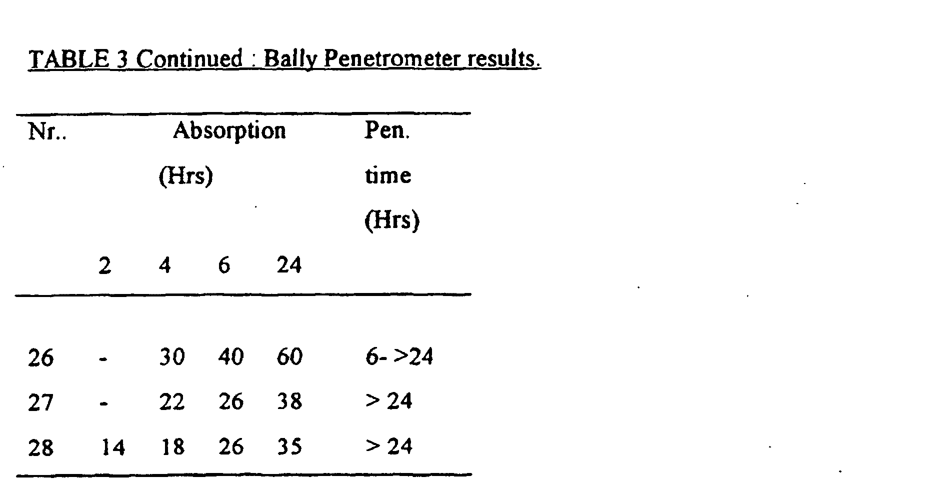

### Examples 29 and 30 :

The fluorochemical compositions of examples 5 and 6 were applied to leather with the same treatment procedure as used in examples 18 - 21. The performance results are listed in Table 4.

**TABLE 4**

| Nr. | Fluorochemical comp. of Example | SUEDE | | | | | GRAIN | | | | |
|---|---|---|---|---|---|---|---|---|---|---|---|
| | | OR | WR | SR | AOR | AWR | OR | WR | SR | AOR | AWR |
| 29 | 5 | 6 | 7 | 90 | 4 | 7 | 2 | 6 | 95 | 1 | 4 |
| 30 | 6 | 6 | 8 | 85 | 5 | 6 | 2- | 4 | 95 | 1 | 3 |

## Claims

1. A fluorochemical composition for the treatment of leather, comprising (a) a reaction product of (i) a polydiene grafted with an ethylenically unsaturated dicarboxylic acid anhydride and:
(ii) a fluorochemical compound selected from the group consisting of a fluorinated alcohol, a fluorinated thiol and a fluorinated amine or
(iii) a mixture of said fluorochemical compound and a compound of the formula R-X wherein R is an aliphatic group containing at least 4 carbon atoms and X is hydroxy, SH or a primary or secondary amino group or (b) a salt of said reaction product.

2. A fluorochemical composition according to claim 1 wherein said polydiene grafted with an ethylenically unsaturated dicarboxylic acid anhydride has a molecular weight between 1000 and 100000.

3. A fluorochemical composition according to claim 1 wherein said polydiene grafted with an ethylenically unsaturated dicarboxylic acid anhydride is a polydiene grafted with an ethylenically unsaturated dicarboxylic acid anhydride selected from the group consisting of maleic acid anhydride, itaconic acid anhydride and citraconic acid anhydride.

4. A fluorochemical composition according to claim 1 wherein said polydiene grafted with an ethylenically unsaturated dicarboxylic acid anhydride is a polybutadiene grafted with an ethylenically unsaturated dicarboxylic acid anhydride.

5. A fluorochemical composition according to claim 1 wherein said reaction product comprises a polymer comprising a divalent unit of formula (I), a divalent unit of formula (II) and at least one divalent unit of formula (III) or (IV):
-CH₂CH=CHCH₂- (I) 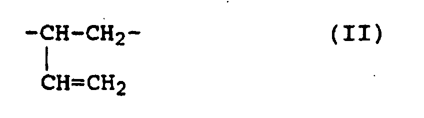 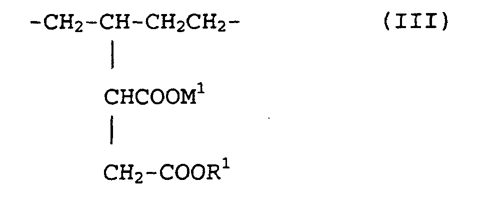 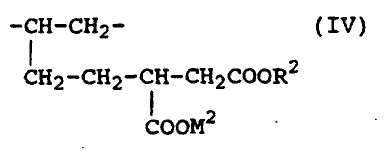
wherein M¹ and M² independently represent hydrogen or a cation and R¹ and R² independently represent a perfluorinated alkyl group having at least 3 carbon atoms.

6. A fluorochemical composition according to claim 5 wherein said polymer further comprises divalent units according to formula (V) or (VI): 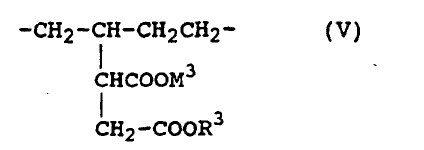 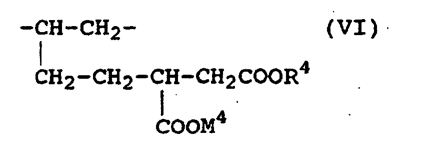 wherein M³ and M⁴ independently represent hydrogen or a cation and R³ and R⁴ independently represent an alkyl group having at least 4 carbon atoms.

7. A fluorochemical composition according to claim 6 wherein said polymer comprises between 99 mol% and 50 mol% of divalent units corresponding to formula (I) or (II) and between 1 mol% and 50 mol% of divalent units corresponding to formula (III), (IV), (V) or (VI).

8. A fluorochemical composition according to claim 7 wherein at least 25 mol% of the total amount of divalent units corresponding to formula (III), (IV), (V) or (VI) are divalent units corresponding to formula (III) or (IV).

9. A fluorochemical composition according to any of the previous claims wherein said fluorochemical composition is in the form of an aqueous dispersion or an aqueous solution.

10. Method of treating leather comprising contacting a leather with a fluorochemical composition as defined in any of claims 1 to 9.

11. Use of a fluorochemical composition as defined in any of claims 1 to 9 to impart water proofness or water repellency to leather.

12. A reaction product of a polydiene grafted with (i) an ethylenically unsaturated dicarboxylic acid anhydride and:
(ii) a fluorochemical compound selected from the group consisting of a fluorinated alcohol, a fluorinated thiol and a fluorinated amine or
(iii) a mixture of said fluorochemical compound and a compound of the formula R-X wherein R is an aliphatic group containing at least 4 carbon atoms and X is hydroxy, SH or a primary or secondary amino group.

13. A salt of a reaction product as defined in claim 12.

## Patentansprüche

1. Fluorchemikalische Zusammensetzung für die Behandlung von Leder, enthaltend (a) ein Umsetzungsprodukt aus (i) einem mit ethylenisch ungesättigtem Dicarbonsäureanhydrid gepfropften Polydien und:
(ii) einer fluorchemikalischen Verbindung aus der Reihe fluorierter Alkohol, fluoriertes Thiol und fluoriertes Amin oder
(iii) einer Mischung aus der fluorchemikalischen Verbindung und einer Verbindung der Formel R-X, wobei R für eine mindestens 4 Kohlenstoffatome enthaltende aliphatische Gruppe und X für Hydroxy, SH oder eine primäre oder sekundäre Aminogruppe steht, oder (b) ein Salz des Umsetzungsprodukts.

2. Fluorchemikalische Zusammensetzung nach Anspruch 1, bei der das mit einem ethylenisch ungesättigten Dicarbonsäureanhydrid gepfropfte Polydien ein Molekulargewicht zwischen 1000 und 100000 aufweist.

3. Fluorchemikalische Zusammensetzung nach Anspruch 1, bei der es sich bei dem mit einem ethylenisch ungesättigten Dicarbonsäureanhydrid gepfropften Polydien um ein mit einem ethylenisch ungesättigten Dicarbonsäureanhydrid aus der Reihe Maleinsäureanhydrid, Itaconsäureanhydrid und Citraconsäureanhydrid gepfropftes Polydien handelt.

4. Fluorchemikalische Zusammensetzung nach Anspruch 1, bei der es sich bei dem mit einem ethylenisch ungesättigten Dicarbonsäureanhydrid gepfropften Polydien um ein mit einem ethylenisch ungesättigten Dicarbonsäureanhydrid gepfropftes Polybutadien handelt.

5. Fluorchemikalische Zusammensetzung nach Anspruch 1, bei der das Umsetzungsprodukt ein eine zweiwertige Einheit der Formel (I), eine zweiwertige Einheit der Formel (II) und mindestens eine zweiwertige Einheit der Formel (III) oder (IV):
-CH₂CH=CHCH₂- (I) 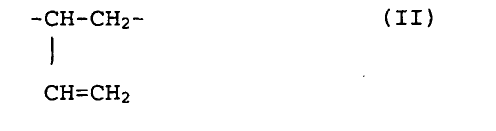 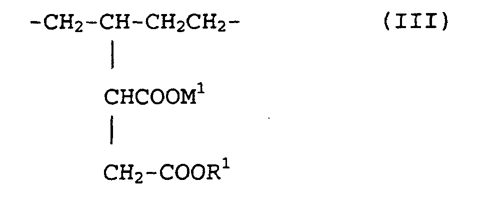 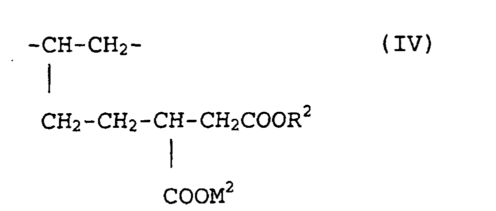
enthaltendes Polymer enthält, wobei M¹ und M² unabhängig voneinander Wasserstoff oder ein Kation und R¹ und R² unabhängig voneinander eine perfluorierte Alkylgruppe mit mindestens 3 Kohlenstoffatomen bedeuten.

6. Fluorchemikalische Zusammensetzung nach Anspruch 5, bei der das Polymer auch noch zweiwertige Einheiten entsprechend der Formel (V) oder (VI): 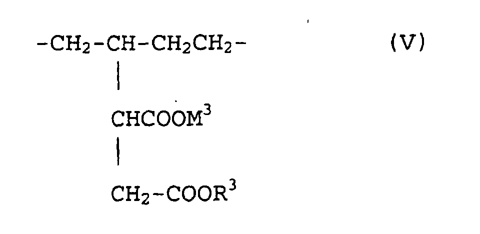 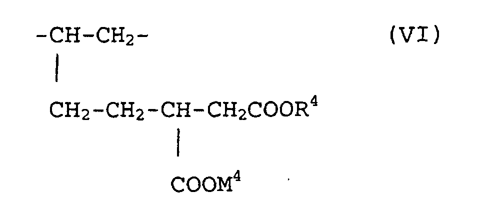 enthält, wobei M³ und M⁴ unabhängig voneinander Wasserstoff oder ein Kation und R³ und R⁴ unabhängig voneinander eine Alkylgruppe mit mindestens 4 Kohlenstoffatomen bedeuten.

7. Fluorchemikalische Zusammensetzung nach Anspruch 6, bei der das Polymer zwischen 99 Mol-% und 50 Mol-% zweiwertiger Einheiten entsprechend der Formel (I) oder (II) und zwischen 1 Mol-% und 50 Mol-% zweiwertiger Einheiten entsprechend der Formel (III), (IV), (V) oder (VI) enthält.

8. Fluorchemikalische Zusammensetzung nach Anspruch 7, bei der es sich bei mindestens 25 Mol-% der Gesamtmenge zweiwertiger Einheiten entsprechend der Formel (III), (IV), (V) oder (VI) um zweiwertige Einheiten entsprechend der Formel (III) oder (IV) handelt.

9. Fluorchemikalische Zusammensetzung nach einem der vorhergehenden Ansprüche, bei der die fluorchemikalische Zusammensetzung in Form einer wäßrigen Dispersion oder als wäßrige Lösung vorliegt.

10. Verfahren zur Behandlung von Leder, bei dem man Leder mit einer fluorchemikalischen Zusammensetzung gemäß einem der Ansprüche 1 bis 9 in Kontakt bringt.

11. Verwendung einer fluorchemikalischen Zusammensetzung gemäß einem der Ansprüche 1 bis 9 zur Hydrophobierung von Leder.

12. Umsetzungsprodukt aus (i) einem mit ethylenisch ungesättigtem Dicarbonsäureanhydrid gepfropften Polydien und:
(ii) einer fluorchemikalischen Verbindung aus der Reihe fluorierter Alkohol, fluoriertes Thiol und fluoriertes Amin oder
(iii) einer Mischung aus der fluorchemikalischen Verbindung und einer Verbindung der Formel R-X, wobei R für eine mindestens 4 Kohlenstoffatome enthaltende aliphatische Gruppe und X für Hydroxy, SH oder eine primäre oder sekundäre Aminogruppe steht.

13. Salz eines Umsetzungsprodukts gemäß Anspruch 12.

## Revendications

1. Composition chimique fluorée pour le traitement du cuir, comprenant
(a) un produit réactionnel
(i) d'un polydiène greffé avec un anhydride d'acide dicarboxylique éthyléniquement insaturé et :
(ii) d'un composé chimique fluoré sélectionné parmi le groupe comprenant un alcool fluoré, un thiol fluoré et une amine fluorée ou
(iii) d'un mélange dudit composé chimique fluoré et d'un composé de formule R-X dans laquelle R est un groupement aliphatique contenant au moins 4 atomes de carbone et X est un hydroxy, SH ou un groupement aminé primaire ou secondaire ou
(b) un sel dudit produit réactionnel.

2. Composition chimique fluorée suivant la revendication 1, dans laquelle ledit polydiène greffé avec un anhydride d'acide dicarboxylique éthyléniquement insaturé présente un poids moléculaire d'entre 1000 et 100 000.

3. Composition chimique fluorée suivant la revendication 1, dans laquelle ledit polydiène greffé avec un anhydride d'acide dicarboxylique éthyléniquement insaturé est un polydiène greffé avec un anhydride d'acide dicarboxylique éthyléniquement insaturé sélectionné parmi le groupe comprenant l'anhydride d'acide maléique, l'anhydride d'acide itaconique et l'anhydride d'acide citraconique

4. Composition chimique fluorée suivant la revendication 1, dans laquelle ledit polydiène greffé avec un anhydride d'acide dicarboxylique éthyléniquement insaturé est un polybutadiène greffé avec un anhydride d'acide dicarboxylique éthyléniquement insaturé.

5. Composition chimique fluorée suivant la revendication 1, dans laquelle ledit produit réactionnel comprend un polymère comprenant une unité divalente de formule (I), une unité divalente de formule (II) et au moins une unité divalente de formule (III) ou (IV) :
-CH₂CH=CHCH₂- (I) 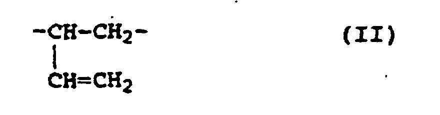 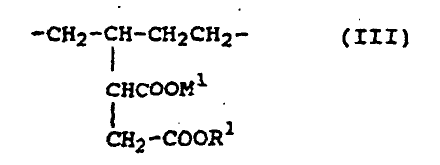 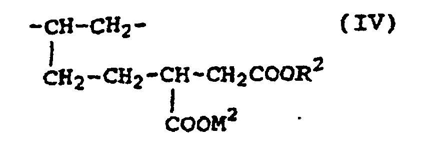
dans lesquelles M¹ et M² représentent indépendamment un hydrogène ou un cation et R¹ et R² représentent indépendamment un groupement alkyle perfluoré présentant au moins 3 atomes de carbone.

6. Composition chimique fluorée suivant la revendication 5, dans laquelle ledit polymère comprend en outre des unités divalentes suivant la formule (V) ou (VI) : 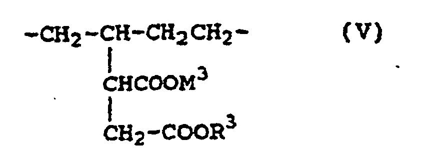 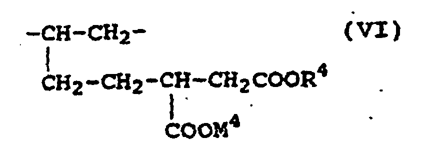 dans lesquelles M³ et M⁴ représentent indépendamment un hydrogène ou un cation et R³ et R⁴ représentent indépendamment un groupement alkyle présentant au moins 4 atomes de carbone.

7. Composition chimique fluorée suivant la revendication 6, dans laquelle ledit polymère comprend entre 99% en mole et 50% en mole d'unités divalentes correspondant à la formule (I) ou (II) et entre 1% en mole et 50% en mole d'unités divalentes correspondant à la formule (III), (IV), (V) ou (VI).

8. Composition chimique fluorée suivant la revendication 7, dans laquelle au moins 25% en mole de la quantité totale d'unités divalentes correspondant à la formule (III), (IV), (V) ou (VI) sont des unités divalentes correspondant à la formule (III) ou (IV).

9. Composition chimique fluorée suivant l'une quelconque des revendications précédentes, dans laquelle ladite composition chimique fluorée est sous la forme d'une dispersion aqueuse ou d'une solution aqueuse.

10. Procédé de traitement du cuir comprenant la mise en contact d'un cuir avec une composition chimique fluorée suivant l'une quelconque des revendications 1 à 9.

11. Utilisation d'une composition chimique fluorée suivant l'une quelconque des revendications 1 à 9 pour conférer une résistance à l'eau ou une répulsion vis-à-vis de l'eau au cuir.

12. Produit réactionnel d'un polydiène greffé avec
(i) un anhydride d'acide dicarboxylique éthyléniquement insaturé et :
(ii) un composé chimique fluoré sélectionné parmi le groupe comprenant un alcool fluoré, un thiol fluoré et une amine fluorée ou
(iii) un mélange dudit composé chimique fluoré et d'un composé de formule R-X dans laquelle R est un groupement aliphatique contenant au moins 4 atomes de carbone et X est un hydroxy, SH ou un groupement aminé primaire ou secondaire.

13. Sel d'un produit réactionnel suivant la revendication 12.
